(19) Europäisches Patentamt
European Patent Office
Office européen des brevets

(11) **EP 2 467 822 B1**

## (12) EUROPÄISCHE PATENTSCHRIFT

(45) Veröffentlichungstag und Bekanntmachung des Hinweises auf die Patenterteilung:
**02.10.2013 Patentblatt 2013/40**

(21) Anmeldenummer: **10739887.7**

(22) Anmeldetag: **27.07.2010**

(51) Int Cl.:
*G06T 3/40* (2006.01)  *G06F 3/048* (2013.01)

(86) Internationale Anmeldenummer:
**PCT/EP2010/060896**

(87) Internationale Veröffentlichungsnummer:
**WO 2011/020683 (24.02.2011 Gazette 2011/08)**

(54) **KONTINUIERLICHE BESTIMMUNG EINER PERSPEKTIVE**

CONTINUOUS DETERMINATION OF A PERSPECTIVE

DÉTERMINATION CONTINUE D'UNE PERSPECTIVE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **19.08.2009 DE 102009038095**

(43) Veröffentlichungstag der Anmeldung:
**27.06.2012 Patentblatt 2012/26**

(73) Patentinhaber: **Siemens Aktiengesellschaft 80333 München (DE)**

(72) Erfinder: **ECKL, Roland 81549 München (DE)**

(56) Entgegenhaltungen:
**EP-A1- 1 363 246    WO-A1-2005/003986
WO-A2-2008/005505    US-A- 5 751 927**

- **BUXTON B: "MultiTouch Systems that I Have Known and Loved" INTERNET CITATION 9. Oktober 2009 (2009-10-09), Seiten 1-27, XP007915504 Gefunden im Internet: URL:http://www.billbuxton.com/multitouchOverview.html [gefunden am 2010-10-26]**

## Beschreibung

Die Erfindung betrifft Verfahren zum Festlegen eines Blickwinkels für einen Beobachter auf ein Objekt bzw. zum Ausrichten eines Objektes durch Festlegen seiner Lage zum Betrachten durch einen Beobachter. Weiterhin betrifft die Erfindung Bedieneinrichtungen zum Ausführen der Verfahren.

Technische Zeichen- und Darstellungsprogramme (CAD, AutoDesk, JT2Go Viewer, ...), Spezialanwendungen (3D Computer Tomographen u.a.), aber auch einfache 3D- Viewer für den privaten oder zumindest nicht rein kommerziellen Gebrauch (Google Earth, Microsoft Virtual Earth, ...), bieten die Möglichkeit einzelne oder aus mehreren Teilen zusammengesetzte Objekte, aber auch vollständige Umgebungen (Fabrikanlagen, virtuelle Welten) im 3D- Raum darzustellen und diese aus verschiedenen Perspektiven zu betrachten.

Die verbreiteste Art, um den Betrachtungswinkel auf ein Objektes festzulegen stellt die direkte Manipulation am Objekt selbst dar. Hierbei wird in der Regel das Objekt per Mauszeiger am Computer angeklickt, wobei eine Bewegung in der Horizontalen und/oder Vertikalen das Objekt bezüglich seines Mittelpunktes dreht solange die Maustaste gehalten wird. Je nach genutzten Maustasten kann das Objekt häufig auch verschoben oder heran- bzw. weggezoomt werden. Der Objektmittelpunkt, welcher beim Einstellen der Perspektive als Bezugspunkt für die Blickrichtung dient, wird dabei in der Regel nicht variiert.

Nach diesem Prinzip arbeiten beinahe alle gängigen Programme mit 3D-Funktionalität zur Objektbetrachtung. In einigen Fällen sind auch bestimmte Kippbewegungen, Rotationen und andere kurze Bewegungsabläufe durch Auswahl per Kontextmenü möglich, oder in Form von Piktogrammen verfügbar, welche am konkreten oder abstrakten Objekt an den relevanten  Stellen dauerhaft angezeigt werden oder sobald der Mauszeiger an den relevanten Stellen des konkreten Objektes verweilt.

In der Patentanmeldung US2007/0282792A1 sind System und Verfahren zum Speichern, zum Zugriff und zur Darstellung von standortbezogenen Informationen (geo-located content) in einem 3D Modell offenbart.

Es ist auch bekannt, vordefinierte Ansichten über ein Kontext-Menü auszuwählen. Diese können zuvor explizit definiert worden sein, oder aber sind durch den Verlauf der X, Y und Z-Achse gegeben (etwa in Form von "Vorne", "Hinten", "Links", "Oben", "Osten", "Nord-Westen", u. ä.) Solche vordefinierten Ansichten werden meist direkt angesprungen und führen für einen Benutzer zu keinem flüssigen Ablauf der Ansicht.

Bei zweidimensionalen Ansichten, meist in Form von Karten, wird bei bekannten computer-unterstützten Ansätzen mit der Maus ein beliebiger Punkt "gegriffen" und die die gesamte Fläche mit der Bewegung der Maus verschoben. Für größere Ansichtsveränderungen ist hierbei ein häufiges "Nachgreifen" nötig. Alternativ existiert auch hier bereits häufig die Möglichkeit etwa feste geographische Punkte aus einer zuvor definierten Liste auszuwählen und anzuspringen.

Die EP 1 363 246 A1 offenbart eine Anzeigesteuereinrichtung zur Anzeige einer Vielzahl von Informations-Objekten, einschließlich eines Informationsobjekts, das durch eine dreidimensionale Form in einem dreidimensionalen virtuellen Raum dargestellt wird. Durch die Anzeigesteuereinrichtung wird eine darzustellende Ansicht auf der Grundlage einer Form des darzustellenden Informationsobjekts sowie einer Ansichts-Bewegungs-Anweisung durch einen Benutzer ermittelt. Die angezeigten Bilder der Objekte werden entsprechend den Anweisungen auf einem Display angezeigt.

Die Aufgabe der vorliegenden Erfindung ist es, Verfahren und Bedienelemente zur kontinuierlichen Bestimmung einer Perspektive  bzw. eines Blickwinkels bzgl. eines räumlichen Fixpunktes bereitzustellen.

Die Aufgabe wird gelöst durch ein Verfahren zum Festlegen eines Blickwinkels für einen Beobachter auf ein Objekt, insbesondere dreidimensionales Objekt, umfassend die folgenden Schritte:

a) Festlegen eines Blickwinkels für den Beobachter durch mechanisch-taktile oder indirekte Eingabe auf einer kreisförmigen, im Wesentlichen ebenen, Eingabefläche,
wobei ein, durch die Eingabe festgelegter, Punkt der kreisförmigen Eingabefläche in einen Positionspunkt auf einer virtuellen Kugel umgerechnet wird,
wobei die Mittelpunkte der virtuellen Kugel und des Objektes im Wesentlichen übereinstimmen, und
wobei durch die Verbindungslinie vom Mittelpunkt der virtuellen Kugel zum Positionspunkt auf der Kugel der Blickwinkel für den Beobachter festgelegt wird,
wobei die mechanisch-taktile oder indirekte Eingabe von der Eingabefläche kontinuierlich erfasst wird und bei Eintritt in eine um den Kreisrand befindliche Übergangszone der Eingabefläche automatisch der Positionspunkt auf den hinteren Teil der virtuellen Kugel wandert; und
b) Darstellen des Objektes bezüglich des festgelegten Blickwinkels auf einer Ausgabeeinrichtung. Es sind somit flüssige Änderungen des Betrachtungswinkels auf ein Objekt (z.B. Weltkugel oder jedes andere Objekt) möglich, ohne dass eine Begrenzung durch den Bildschirmrand einer Ausgabeeinrichtung erfolgt. Das Verfahren ist vorteilhaft für die Ansicht von dreidimensionalen Objekten geeignet, es ist aber auch bei zweidimensionalen Objekten (z.B. Karten) einsetzbar. Die Eingabe kann mechanisch-taktil durch direkte Berührung der Eingabefläche (z.B. Touchscreen oder Touchpad) erfolgen, aber auch indirekt z.B. durch Mausbewegungen.

Die Aufgabe wird weiterhin gelöst durch ein Verfahren zum Ausrichten eines Objektes durch Festlegen seiner Lage im dreidimensionalen Raum, umfassend die folgenden Schritte:

a) Festlegen einer Achse des Objektes;
b) Festlegen der Lage durch mechanisch-taktile oder indirekte Eingabe auf einer kreisförmigen, im Wesentlichen ebenen, Eingabefläche,
wobei ein, durch die Eingabe festgelegter, Punkt der kreisförmigen Eingabefläche in einen Positionspunkt auf einer virtuellen Kugel umgerechnet wird,
wobei die Mittelpunkte der virtuellen Kugel und des Objektes im Wesentlichen übereinstimmen, und
wobei das Objekt gemäß der festgelegten Achse gedreht wird, so dass die Verbindungslinie vom Mittelpunkt der virtuellen Kugel zum Positionspunkt auf der Kugel und die festgelegte Achse übereinstimmen,
wobei die mechanisch-taktile oder indirekte Eingabe von der Eingabefläche kontinuierlich erfasst wird und bei Eintritt in eine um den Kreisrand befindliche Übergangszone der Eingabefläche automatisch der Positionspunkt auf den hinteren Teil der virtuellen Kugel wandert. Bei dieser Ausführungsform ändert sich nicht der Blickwinkel auf das Objekt, sondern das Objekt verändert kontinuierlich seine Lage im Raum gemäß der Eingaben eines Beobachters (Benutzers). Die Eingabe kann auch bei dieser Ausführungsform mechanisch-taktil durch direkte Berührung der Eingabefläche (z.B. Touchscreen oder Touchpad) erfolgen, aber auch indirekt z.B. durch Mausbewegungen eines Benutzers.

Eine erste vorteilhafte Ausgestaltung der Erfindung liegt darin, dass eine Kreisaußenlinie auf der Eingabefläche angebracht ist. Dadurch kann ein Bediener leicht erkennen, dass er sich der Übergangszone auf der Eingabefläche nähert oder sich schon in ihr befindet. Die Kreisaußenlinie kann farblich als Linie oder als tastbares Element (Erhebung, Rille etc.) ausgebildet sein.

Eine weitere vorteilhafte Ausgestaltung der Erfindung liegt darin, dass ein Kreismittelpunkt auf der Eingabefläche angebracht ist. Der Kreismittelpunkt kann farblich als Punkt oder als tastbares Element (Erhebung, Vertiefung) ausgebildet sein. Dies erleichtert einem Bediener die Orientierung auf der Eingabefläche.

Eine weitere vorteilhafte Ausgestaltung der Erfindung liegt darin, dass die Übergangszone farblich oder taktil auf der Eingabefläche angebracht ist. Auch dies erleichtert einem Bediener die Orientierung auf der Eingabefläche. Die Breite der Übergangszone ist prinzipiell beliebig wählbar. Vorteilhafterweise wird die Breite der Übergangszone so gewählt, dass sie nicht zu klein ist (man also bei einfachen Bewegungen den Seitenwechsel nicht verpasst) aber auch nicht zu groß (Seitenwechsel obwohl man nur bis zum Rand und auf derselben Seite wieder zurück wollte). Die Größte richtet sich also in der Regel danach ob die Eingabe mechanisch-taktil oder indirekt erfolgt, aber auch in Abhängigkeit zur Größe des Eingabegerätes.

Eine weitere vorteilhafte Ausgestaltung der Erfindung liegt darin, dass die Umrechnung einer Position auf der Eingabefläche auf den Positionspunkt der virtuellen Kugel durch eine Kegelmantel- oder Azimutal-Projektion erfolgt. Solche Projektionen können durch Standardprogramme auf Standardhardware (z.B. PC, Laptop) implementiert werden. Ebenso können Verzerrungen der Projektionen (gnomonische Projektionen) dazu dienen Entfernungen zum Kreismittelpunkt längentreu oder annähernd längentreu umzurechnen.

Eine weitere vorteilhafte Ausgestaltung der Erfindung liegt darin, dass die kreisförmige Eingabefläche das Objekt selbst umgibt oder zwischen Beobachter und Objekt ist. Dies ermöglicht den Einsatz z.B. auf einem berührungsempfindlichen Tisch, z.B. einem Surface™-Tisch. Ein Bediener sieht das Objekt direkt hinter einer im Wesentlichen transparenten Eingabefläche (die Eingabefläche kann z.B. visuell sichtbar sein und trotzdem eine Durchsicht auf ein dahinterliegendes Objekt ermöglichen).

Eine weitere vorteilhafte Ausgestaltung der Erfindung liegt darin, dass der Blickwinkel auf Ausschnitte des Objekts beschränkt ist. Prinzipiell können auch nur Kugelausschnitte angewählt werden. Dies können einfache Schnitte der Kugel mit Flächen sein, aber auch komplexere, mathematisch berechenbare Strukturen. Dies erlaubt die Einschränkung der verfügbare Blickwinkel auf das Objekt, etwa nur die Vorderseite eines Objekts, oder nur Blick von oben mit einer gewissen Mindesthöhe, etc.

Eine weitere vorteilhafte Ausgestaltung der Erfindung liegt darin, dass die Eingabefläche konvex oder konkav ist. Dies erleichtert die Orientierung des Benutzers, ohne den Blick vom Bildschirm abwenden zu müssen. Außerdem erleichtert diese Ausführung die Mittelpunktfindung auf der Eingabefläche für den Benutzer.

Eine weitere vorteilhafte Ausgestaltung der Erfindung liegt darin, dass die Blickrichtung und/oder Ausgangspunkt des Beobachters um einen festen relativen Wert verschiebbar sind. Dies erhöht die Flexibilität des Benutzers bei der Auswahl von Perspektiven und Blickrichtungen.

Eine weitere vorteilhafte Ausgestaltung der Erfindung, insbesondere zum Ausrichten eines Objektes, liegt in der Darstellung des Objektes bezüglich der durch die Lageveränderung sich ergebenden Ansicht. Dadurch lässt sich das Objekt direkt in die vom Benutzer gewünschte Ansicht drehen.

Eine weitere vorteilhafte Ausgestaltung der Erfindung, insbesondere zum Ausrichten eines physikalischen Objektes, liegt in der Drehung des Objektes bezüglich der errechneten Lageveränderung. Dies unterstützt insbesondere eine kontinuierliche Drehung des Objektes.

Die Aufgabe wird außerdem gelöst, im Wesentlichen für die Betrachtung zweidimensionaler Objekte, durch ein Verfahren zum Verschieben einer Ansicht, umfassend die folgenden Schritte:

a) Festlegen der Lage durch mechanisch-taktile oder indirekte Eingabe auf einer kreisförmigen, im Wesentlichen ebenen, Eingabefläche,
wobei ein, durch die Eingabe festgelegter, Punkt der kreisförmigen Eingabefläche in einen Positionspunkt auf einer virtuellen Kugel umgerechnet wird,
wobei die Ansicht in Richtung und Entfernung der berechneten Positionsänderung des Punktes auf der Oberfläche der virtuellen Kugel verschoben wird,
wobei die mechanisch-taktile oder indirekte Eingabe von der Eingabefläche kontinuierlich erfasst wird und bei Eintritt in eine um den Kreisrand befindliche Übergangzone der Eingabefläche automatisch der Positionspunkt auf den hinteren Teil der virtuellen Kugel wandert. Damit sind auch flüssige Änderungen des Betrachtungswinkels auf ein zweidimensionales Objekt (z.B. Landkarte) möglich, ohne dass eine Begrenzung durch den Bildschirmrand einer Ausgabeeinrichtung erfolgt.

Eine vorteilhafte Ausgestaltung liegt darin, dass die Ansicht einer Karte oder anderen zweidimensionalen Fläche entspricht. Dadurch lassen sich alle Arten von zweidimensionalen Flächen kontinuierlich perspektivisch für einen Beobachter "abfahren".

Eine weitere vorteilhafte Ausgestaltung liegt darin, dass die Ansicht der Position einer Kamera in einer Ebene entspricht. Dadurch kann ein Benutzer eine virtuelle Position (Kameraposition) auf der Ebene (Fläche) einnehmen und von dort aus die Ebene "abfahren".

Die Aufgabe wird ferner gelöst durch Bedienelemente zur Durchführung der erfindungsgemäßen Verfahren. Das Bedienelement kann dabei auf einer Ausgabeeinheit (z.B. Monitor, Display) darstellbar oder integriert sein und direkt mechanisch-taktil (z.B. auf einem Touchscreen oder Touchpad) oder indirekt z.B. über Mauseingabe von einem Benutzer bedienbar sein. Das Bedienelement kann aber auch separat von der Ausgabeeinheit ausgebildet sein und von einem Benutzer insbesondere mechanisch-taktil bedient werden. Ein separates Bedienelement kann eben, aber auch konvex oder konkav ausgebildet sein und Markierungen für den Mittelpunkt, die Kreisaußenlinie oder die Übergangzonen aufweisen. Vorteilhafterweise sind diese Markierungen für einen Benutzer tastbar (z.B. durch Erhebungen oder Vertiefungen) ausgebildet. Dies erleichtert das Arbeiten für den Benutzer, ohne den Blick vom Bildschirm abwenden zu müssen.

Ein Ausführungsbeispiel der Erfindung ist in der Zeichnung dargestellt und wird im Folgenden erläutert.

Dabei zeigen:

FIG 1      eine Schemadarstellung zum prinzipiellen Einsatz des erfindungsgemäßen Verfahrens, wobei im ersten Teilbild der Blickwinkel auf ein Objekt gerichtet ist, und im zweiten Teilbild der Blickwinkel von einem Fixpunkt im Objekt ausgeht,

FIG 2a      ein erstes Beispiel für ein Steuerelement zum Verändern des Blickwinkels auf ein Objekt,

FIG 2b      ein zweites Beispiel für ein Steuerelement zum Verändern des Blickwinkels auf ein Objekt,

FIG 2c      ein drittes Beispiel für ein Steuerelement zum Verändern des Blickwinkels auf ein Objekt,

FIG 2d      ein viertes Beispiel für ein Steuerelement zum Verändern des Blickwinkels auf ein Objekt,

FIG 2e      ein fünftes Beispiel für ein Steuerelement zum Verändern des Blickwinkels auf ein Objekt,

FIG 2f      ein sechstes Beispiel für ein Steuerelement zum Verändern des Blickwinkels auf ein Objekt,

FIG 2g      ein siebtes Beispiel für ein Steuerelement zum Verändern des Blickwinkels auf ein Objekt,

FIG 3      eine beispielhafte Abbildung eines Punktes von einer Scheibe auf eine Kugel,

FIG 4      eine beispielhafte Darstellung einer Übergangzone auf einer Kreisscheibe,

FIG 5      eine schematische Darstellung die ein Objekt zeigt, welches von einem Steuerkreis umgeben ist,

FIG 6         beispielhafte Darstellungen für die Begrenzung der möglichen Blickwinkel innerhalb des Kreises,

FIG 7         schematische Darstellungen für eine beispielhafte Visualisierung von Begrenzungen auf der Steuerscheibe,

FIG 8         eine beispielhafte Darstellung der Eingabescheibe als eigenständiges Kontrollelement auf einem Bildschirm,

FIG 9         eine beispielhafte Darstellung der Eingabescheibe als eigenständiges Kontrollelement auf einem Handheld-Gerät (z.B. Smart Phone, PDA),

FIG 10        eine beispielhafte Darstellung der Eingabescheibe als externes Bediengerät,

FIG 11a       eine erste beispielhafte Darstellung der Eingabescheibe auf einem berührungsempfindlichen Oberflächentisch, wobei der Steuerkreis über/um das zu betrachtende Objekt gelegt wurde, und

FIG 11b       eine zweite beispielhafte Darstellung der Eingabescheibe auf einem berührungsempfindlichen Oberflächentisch mit dediziertem Kontrollelement.

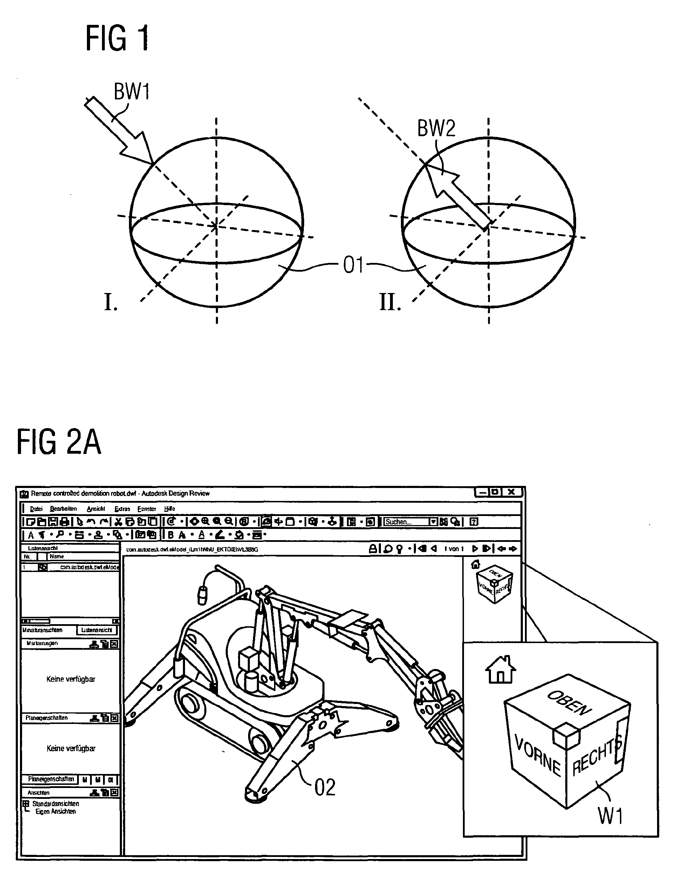

FIG 1 zeigt eine Schemadarstellung zum prinzipiellen Einsatz des erfindungsgemäßen Verfahrens, wobei im ersten Teilbild (I) der Blickwinkel BW1 auf ein Objekt O1 gerichtet ist, und im zweiten Teilbild (II) der Blickwinkel BW2 von einem Fixpunkt im Objekt O1 ausgeht. Es ist somit möglich Perspektiven und Blickrichtungen auf einen Fixpunkt (etwa den Mittelpunkt eines Objekts O1) zu richten (s. Teilbild (I)). Es ist aber  auch möglich Blickwinkel von einem Fixpunkt ausgehend in eine komplexe Umgebung hinaus blicken zu lassen (s. Teilbild (II)).

Das erfindungsgemäße Verfahren beschreibt das Festlegen einer Perspektive auf ein Einzelobjekt O1 (bzw. ein aus mehreren Teilen bestehendes Hauptobjekt) durch den Nutzer (Beobachter), wobei der Blickwinkel BW1, BW2 in kontinuierlicher Weise verändert werden kann.

Das erfindungsgemäße Verfahren ist in unterschiedlichen Applikationen einsetzbar:

• Darstellung von Einzelteilen aus (Teile- ) Katalogen.
• Darstellung von Organen oder Körperteilen zur genaueren visuellen Analyse, nachdem diese etwa mithilfe eines 3D-Tumographen oder anderweitigem medizinischen Scanner erfasst wurden.
• Darstellung einer Geländetopologie, die aus gewisser Distanz betrachtet wird, z.B. die Stromversorgung für ein bestimmtes Gebiet.
• Betrachten von beliebigen einzelnen aus der Umgebung herausgelösten Objekten. Dies könnte etwa ein Gesprächspartner (Avatar) in einer virtuellen Welt sein, nachdem eine gezielte Unterhaltung begonnen wurde.
• Darstellen von umfangreichem Kartenmaterial, welches mehr als den zur Verfügung stehenden Bildschirm einnehmen würde.

Die wohl verbreitetste Art und Weise, um den Betrachtungswinkel auf ein Objektes festzulegen, stellt die direkte Manipulation am Objekt selbst dar. Hierbei wird in der Regel das Objekt per Mauszeiger am Computer angeklickt, wobei eine Bewegung in der Horizontalen und/oder Vertikalen das Objekt bezüglich seines Mittelpunktes dreht solange die Maustaste gehalten wird. Je nach genutzten Maustasten kann das Objekt häufig auch verschoben oder heran- bzw. weggezoomt werden.

Der Objektmittelpunkt, welcher beim Einstellen der Perspektive als Bezugspunkt für die Blickrichtung dient, wird in der Regel nicht variiert.

Nach diesem Prinzip arbeiten beinahe alle gängigen Programme mit 3D-Funktionalität zur Objektbetrachtung. Siehe auch FIG 2a bis FIG 2e.

Nach einem ähnlichen Prinzip funktionieren auch die meisten Applikationen zur Anzeige von Landkarte. Hier wird ein beliebiger Punkt der Karte gegriffen und mit diesem die gesamte Ansicht verschoben. Größere Entfernungen sind hierbei nur über mehrfaches Nachgreifen möglichen, da die Schiebefläche auf die Ausdehnung des verwendeten Bildschirms beschränkt ist.

Aufgrund der Komplexität stehen bei dreidimensionalen Anwendungen neben der direkten Manipulation jedoch häufig zusätzlich noch Abstraktionen des Objektes zur Verfügung. Dies ermöglicht die Manipulation des gesamten Objektes unter Zuhilfenahme der Abstraktion, auch wenn bei starker Vergrößerung nur Teile des Originalobjektes sichtbar sein sollten, oder wenn sich der betrachtete Gegenstand momentan gänzlich außerhalb des sichtbaren Bereichs befindet. Die Abstraktion ist hierbei häufig auf die Form eines Würfels reduziert, um die Seiten des Objekts - links, rechts, vorne, hinten, oben, unten - besser zu verdeutlichen oder gar zu beschriften.

In einigen Fällen sind auch bestimmte Kippbewegungen, Rotationen und andere kurze Bewegungsabläufe. durch Auswahl per Kontextmenü möglich, oder in Form von Piktogrammen verfügbar, welche am konkreten oder abstrakten Objekt an den relevanten Stellen dauerhaft angezeigt werden oder sobald der Mauszeiger an den relevanten Stellen des konkreten Objektes verweilt.

Ebenso sind häufig vordefinierte Ansichten über ein (KontextMenü) auswählbar. Diese können zuvor explizit definiert worden sein, oder aber sind durch den Verlauf der X, Y und Z-Achse gegeben (etwa in Form von "Vorne", "Hinten", "Links", "Oben", "Osten", "Nord-Westen", u. ä.) Solche vordefinierten Ansichten werden meist direkt angesprungen und führen zu keinem flüssigen Ablauf zur neuen Kameraposition, von der der Blickwinkel ausgeht.

FIG 2a zeigt ein erstes Beispiel für ein Steuerelement W1 zum Verändern des Blickwinkels auf ein Objekt O2. In FIG 2a erfolgt eine Manipulation des Objektes (d.h. die Veränderung des Blickwinkels auf das Objekt) unter Zuhilfenahme einer Abstraktion. Die Abstraktion ist dabei auf die Form eines Würfels W1 reduziert. Durch Anklicken des Würfels und Ziehbewegungen erfolgt eine entsprechende Ausrichtung des Blickwinkels.

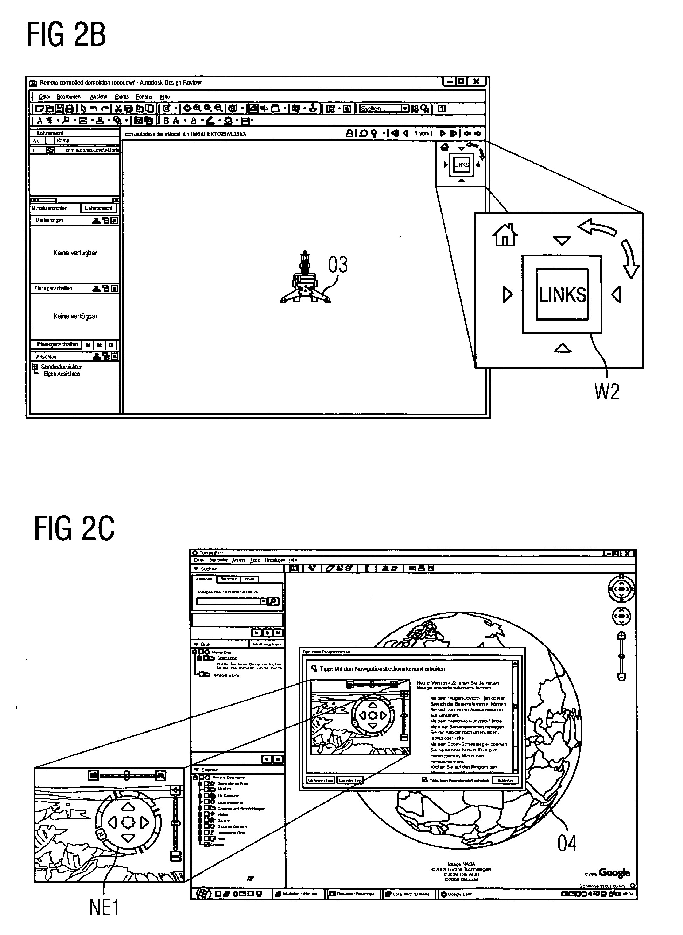

FIG 2b zeigt ein zweites Beispiel für ein Steuerelement W2 zum Verändern des Blickwinkels auf ein Objekt O3. Auch in FIG 2b erfolgt eine Manipulation des Objektes O3 (d.h. die Veränderung des Blickwinkels auf das Objekt) unter Zuhilfenahme einer Abstraktion. Auch in FIG 2b ist die Abstraktion ist auf die Form eines Würfels W2 reduziert. Durch Anklicken einer Würfelseite erfolgt eine entsprechende Ausrichtung des Blickwinkels auf das Objekt 03.

FIG 2c zeigt ein drittes Beispiel für ein Steuerelement NE1 zum Verändern des Blickwinkels auf ein Objekt. Das Steuerelement NE1 stellt ein Navigationselement zum Drehen des Objektes O4 dar (durch das Drehen des Objektes O4 verändert sich auch der Blickwinkel für einen Beobachter). Das Steuerelement NE1 wird üblicherweise durch Mauseingabe bedient.

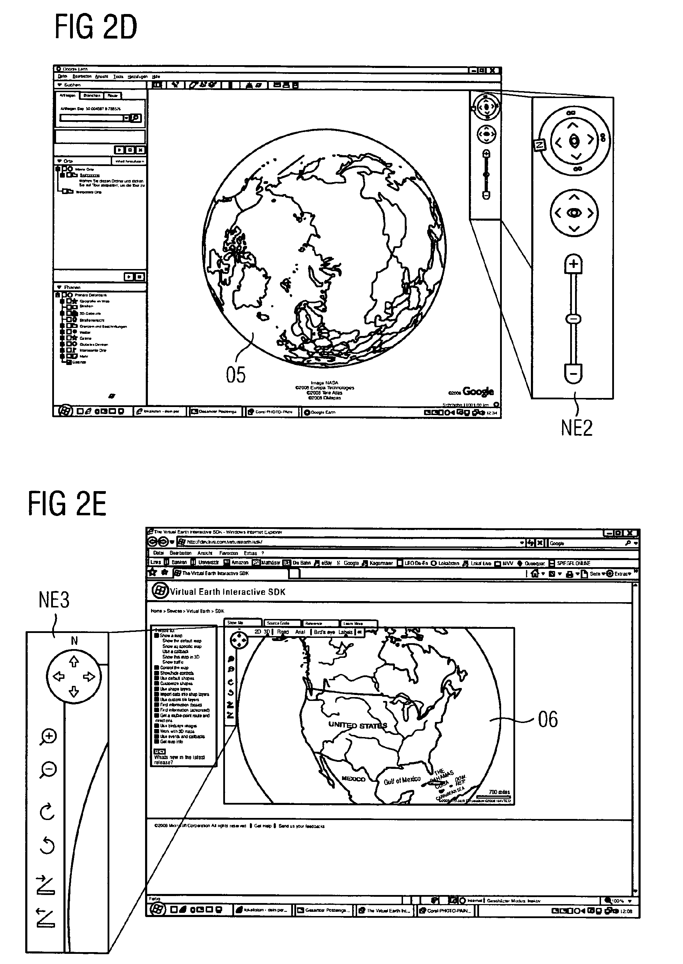

FIG 2d zeigt ein viertes Beispiel für ein Steuerelement zum Verändern des Blickwinkels auf ein Objekt. Auch das Steuerelement NE2 stellt ein Navigationselement zum Drehen des Objektes O5 dar. Auch das Steuerelement NE2 wird üblicherweise durch Mauseingabe bedient. Das Steuerelement NE2 enthält optional auch Eingabeelemente zum Zoomen des Objektes O5.

FIG 2e zeigt ein fünftes Beispiel für ein Steuerelement zum Verändern des Blickwinkels auf ein Objekt. Auch das Steuerelement NE3 stellt ein Navigationselement zum Drehen des Objektes O6 dar. Auch das Steuerelement NE3 wird üblicherweise durch Mauseingabe bedient. Das Steuerelement NE3 enthält optional auch Eingabeelemente zum Zoomen und zum Drehen oder Kippen des Objektes O6.

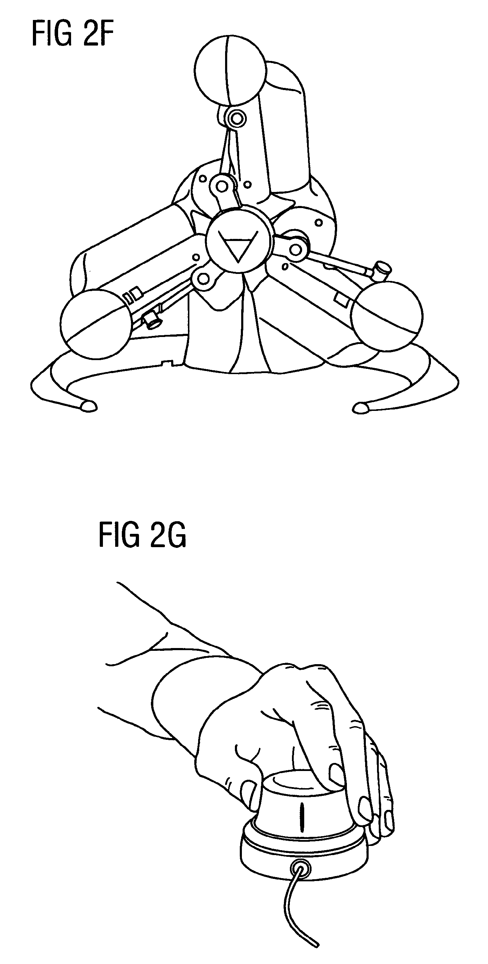

Auch von Seiten der Hardware bestehen bereits zahlreiche Lösungsansätze, jedoch begegnen diese in der Regel nicht der reinen Objektbetrachtung, sondern realisieren komplexe Navigation im 3D-Raum mit bis zu sechs Freiheitsgraden. Im übertragenden Sinn kann auch die Maus als Hardware-Lösung durch direkte Manipulation am Objekt gesehen werden. Die in den FIG 2f und 2g dargestellten Steuerelemente zum Verändern des Blickwinkels stellen im Gegensatz zu den Steuerelementen dargestellt in FIG 2a bis FIG 2e Hardware-Lösungen dar.

FIG 2f zeigt ein sechstes Beispiel für ein Steuerelement zum Verändern des Blickwinkels auf ein Objekt. Das in FIG 2f dargestellte Steuerelement ermöglicht einem Bediener eine komplexe Navigation im 3D- Raum mit bis zu sechs Freiheitsgraden, optional kombiniert mit Force- Feedback (Kraft- Rückmeldung), insbesondere geeignet für den Einsatz bei Computerspielen.

FIG 2g zeigt ein siebtes Beispiel für ein Steuerelement zum Verändern des Blickwinkels auf ein Objekt. Auch das in FIG 2g dargestellte Steuerelement ermöglicht einem Bediener eine komplexe Navigation im 3D-Raum mit bis zu sechs Freiheitsgraden.

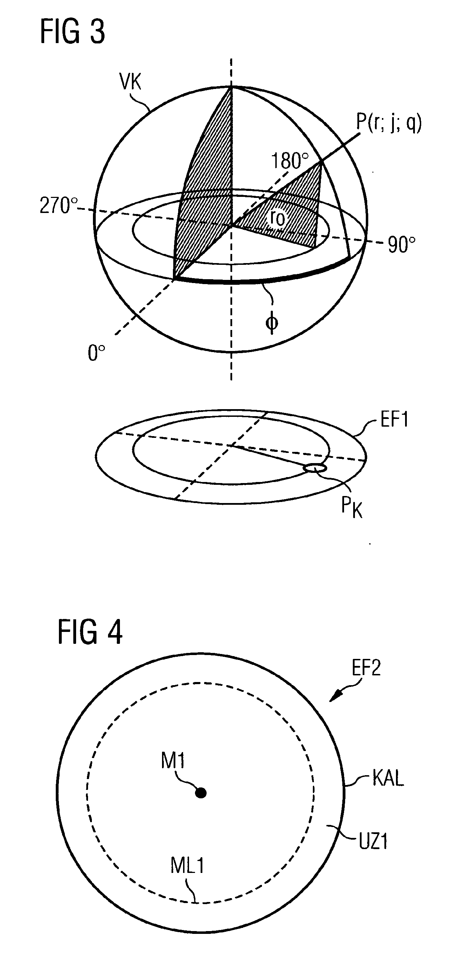

FIG 3 zeigt eine beispielhafte Abbildung eines Punktes von einer Scheibe auf eine Kugel. Das erfindungsgemäße Verfahren ermöglicht das Erfassen bzw. Festlegen des (Blick- ) Winkels auf ein Objekt durch die Steuerung auf einer einfachen Kreisscheibe. Ein Punkt auf dieser Scheibe wird dabei in eine Position auf einer Kugel umgerechnet. Durch Verbinden der festgestellten Position auf der Kugel mit dem von Kugelzentrum wird der Blickwinkel auf das Objekt errechnet. Der Objektmittelpunkt und das Kugelzentrum stimmen hierbei überein. (Ebenso kann dieser Winkel natürlich auch zum Blick vom Kreismittelpunkt aus genutzt werden.) In gleicher Weise kann anstelle einer Kameraposition und deren Blickrichtung auch das betrachtete Objekt selbst gedreht werden. Hierfür kann etwa eine zuvor festgelegte Achse des Objekts mit der Blickrichtung gleichgesetzt werden.

Die Kreisaußenlinie und evt. der Kreismittelpunkt sollten möglichst als Orientierungshilfe für einen Benutzer auf der Scheibe angedeutet werden (optisch oder taktil).

Nachfolgend werden die Schritte zum Ermitteln des Blickwinkels genauer erläutert, sowie die Realisierung einer kontinuierlichen Kamerafahrt, Optimierungen und Abwandlungen des Verfahrens.

**Feststellen der aktuellen Position auf einer Sphäre/Kugel:** Die Kreisscheibe EF liegt in einer virtuellen Kugel VK, auf welche die Position im 3-dimensionalen Raum übertragen werden soll. Der Mittelpunkt der Kugel ist identisch mit dem Kreismittelpunkt.

Auf der Kreisscheibe EF wird die aktuelle Position $P_K$ festgestellt. Darüber hinaus wird festgelegt, ob man sich gegenwärtig vor oder hinter dem zu betrachtenden Objekt im 3D-Raum befindet. Zu diesem gewählten Punkt $P_K$ wird dabei der Punkt $P(r;j;q)$ im dreidimensionalen Raum errechnet; hierfür können an sich sämtliche bekannte Projektionen aus der Geographie Verwendung finden, mit samt ihren jeweiligen Eigenschaften und daraus resultierenden Vor- und Nachteilen. Beispiele hierfür wären die Kegelmantel- oder eine Azimutal-Projektion. Zusätzlich können die Projektionen verzerrt werden.

Den hier exemplarisch aufgezeigten (und einfachen) Fall stellt der Schnittpunkt mit der Kugel dar, wobei senkrecht vom Ursprungspunkt $P_K$ der zweidimensionalen Scheibe aus zum Kugelrand gegangen wird. Wird das Kugelzentrum im Nullpunkt (0, 0, 0) angenommen, können die Werte für die X- und Y- Dimension direkt von der Kreisscheibe übernommen werden. Der Z- Wert ergibt sich als sin (cos (d) ), wobei d die Entfernung des Punktes zum Mittelpunkt auf der zweidimensionalen Scheibe darstellt. Der Wert für d muss hierbei genormt (also zwischen 0 und 1 liegend) sein. Der Z- Wert muss um den entsprechenden Faktor transformiert werden.

Befindet man sich gegenwärtig auf der Rückseite, so besitzt der Z-Wert (hier die Höhe) negatives Vorzeichen.

Die Entfernung der Kamera zum Objekt (- mittelpunkt) entspricht dem Radius der Kugel und kann (je nach evt. gewählter Zoomstufe) beliebig gewählt werden. Um Variationen der Entfernung zu erlauben ist es sinnvoll bei der Umrechnung von Kreis auf Kugel einen Faktor zur Skalierung einzubeziehen, den anfänglichen Kreisradius jedoch unverändert zu lassen.

Die Blickrichtung der Kamera (entspricht dem Blickwinkel) ist stets auf das Objekt gerichtet (bzw. genauer gesagt auf dessen Mittelpunkt, welcher hier mit dem Kreismittelpunkt zusammenfällt), und kann somit auf folgende triviale Weise errechnet werden:

```
LookDirection =
        Vector3D(objectPosition.X - camPosition.X,
        objectPosition.Y - camPosition.Y, objectPosition.Z
        - camPosition.Z);
```

Befindet sich das Objekt gar wie unter der vereinfachten Annahme am Ursprungspunkt (0,0,0), reicht also bereits einfaches Negieren (Negation) der Kamera-Koordinaten. Für den Fall dass von der Position des Kugelmittelpunkts aus geblickt werden soll, werden Objekt- und Kameraposition vertauscht; anstelle der Subtraktion wird die Addition verwendet.

FIG 4 zeigt eine beispielhafte Darstellung einer Übergangszone UZ1 auf einer Kreisscheibe EF2, insbesondere geeignet für eine kontinuierliche Bewegung des Blickwinkels oder für eine kontinuierliche Drehung eines Objektes. In FIG 4 ist die Übergangszone UZ1 auf einer Kreisscheibe EF2 zwischen der Kreisaußenlinie KAL und einer gestrichelten Markierungslinie ML1 angedeutet. Vorteilhafterweise sind der Mittelpunkt M1 der Kreisscheibe EF2 und die Übergangszone UZ1 farblich oder taktil (z.B. durch Rillen, Erhebungen oder Aufrauung) gekennzeichnet. Ein Benutzer kann sich somit orientieren, ohne seinen Blick vom Bildschirm abwenden zu müssen.

Anstelle eines einzelnen Berührens der zweidimensionalen Scheibe EF2 kann die Position durch kontinuierliches Bewegen eines Eingabegerätes oder eines Fingers fließend variiert werden. Der elementare Teil ist hierbei der Wechsel zwischen der zuvor definierten Vorder- und Rückseite des Objekts. Folgende Varianten sind denkbar für das Festlegen der Vorder-und Rückseite des zu betrachtenden Objekts bei der (erneuten) Berührung des Kreises:

- Das Objekt hat eine fest definierte Vorder- und Rückseite; beim Berühren des Kontrollelements wird die zuletzt betrachtete Seite (welche beim letzten "Loslassen" aktiv war) wieder aufgegriffen. Dies benötigt jedoch einen kurzen Flug der Kamera, um einen flüssigen Wechsel des Kamerawinkels zur neuen Startposition zu gewährleisten. Ebenso könnte der Blickwinkel auch schlagartig auf die neue Position wechseln und nur während der Berührung kontinuierlich variiert werden.

- Das Objekt hat eine fest definierte Vorder- und Rückseite; ein fixer Punkt (etwa ein kleine gekennzeichnete Fläche in der Mitte, welche während einer Kamerafahrt sonst keine besondere Bedeutung zukommt) dient zum Wechsel zwischen den beiden Seiten. Hierbei kann die zuletzt betrachtete Seite ggf. wieder aufgegriffen werden. Auch hier ist nur durch einen kurzen Flug der Kamera ein flüssiger Wechsel des Kamerawinkels zur neuen Initial-Position gegeben.

- Die Vorderseite ist stets durch den letzten Betrachtungswinkel definiert. Beim Berühren des Kontrollelements wird automatisch der Ausgangspunkt mit dem aktuellen Kamerawinkel gleichgesetzt. Diese Variante erlaubt das flüssige navigieren auf der Kugel/Sphäre, auch bei Wiederaufnahme und Start einer Kamerafahrt.

Der Wechsel zwischen beiden Seiten erfolgt ggf. nach dem "Betreten" der sogenannten Übergangszone UZ1. Solange man sich vom Kreismittelpunkt M1 aus gesehen weiter nach außen bewegt, wird die Kamera fortwährend gemäß obiger Berechnung neu positioniert. Bewegt man sich innerhalb der Übergangszone UZ1 nun jedoch rückwärts, so erfolgt automatisch ein Wechsel von der Vorder- auf die Rückseite, bzw. anders herum. Es empfiehlt sich nach Möglichkeit die kreisförmige Eingabefläche EF2 je nach Seite unterschiedlich einzufärben.

Allgemein gilt: je größer der Kreis und/oder seine Auflösungsfähigkeit bzgl. des Eingabegeräts (beispielsweise auch ein Finger), desto kleiner kann diese Zone gewählt werden.

Da für einen flüssigen Wechsel von der Vorder- zur Rückseite exakt am Kreisrand KAL die Wendebewegung erfolgen müsste, werden im nachfolgenden Abschnitt einige Optimierungsmöglichkeiten erörtert, welche innerhalb der ganzen Übergangszone UZ1 einen solchen Wechsel unterbrechungsfrei garantieren, ohne dass die Kamera direkt an die neue Position springt.

Anstelle der Kameraposition (zur Bestimmung des Blickwinkels) kann auch das betrachtete Objekt gedreht werden. Dies ermöglicht eine durchgehend gleichbleibende Perspektive auf das Objekt, bei gleichbleibender Blickrichtung; je nach Kamerafahrt würde ansonsten die Perspektive stellenweise auf dem Kopf stehen.

**Optimierung für flüssigen Seitenwechsel:**

Als Optimierungsstrategien für einen flüssigen Wechsel zwischen der Vorder- und Rückseite in zuvor definierter Übergangszone stehen diverse Ansätze zur Verfügung, wobei nachfolgend nur einige exemplarisch hervorgehoben werden sollen:

- An exakt der Stelle des Umkehrens innerhalb der Über- gangszone UZ1 wird ein Korrektur-Vektor erzeugt. Vorder- und Rückseite werden also nicht mehr durch die ursprüngliche Fläche (vgl. Lage der Kontrollscheibe EF2 im 3-dimensionalen Raum) getrennt; stattdessen befinden sich der errechnete Blickwinkel zu diesem Zeitpunkt und die korrigierte Trennscheibe auf derselben Ebene, indem die Trennscheibe um den Korrekturvektor verschoben wird. Etwaige visuelle Aspekte der Kontrollscheibe EF2 müssen an die neue Lage der Trennscheibe zwischen Vorder- und Rückseite unmittelbar angepasst werden.

- Die Einstellung des Blickwinkels erfolgt stets mit unter 0.5 Sekunden Verzug zur tatsächlichen Positionierung durch den Nutzer. Der zeitliche Verzug ist aufgrund seiner Kürze kaum wahrnehmbar, dennoch sollte die Optimierung nur mit einer relativ schmalen Übergangszone kombiniert werden. Beim Wechsel der Vorder- und Rückseite wird die Kamera auf dem kürzesten Weg zwischen alter Position der Vorderseite und neuer auf der Rückseite (oder anders herum) beschleunigt bis der Verzug wieder der ursprünglichen zeitlichen Distanz entspricht. Ebenso kann der Verzug erst beim Wechsel in der Übergangszone auftreten und schnellstmöglich (bei nicht zu deutlich sich abhebender Beschleunigung) wieder durch die beschleunigte Kamerafahrt hereingeholt werden.

- Wie eingangs erwähnt können verschiedenen Projektionen für die Umrechnung zwischen Kreisscheibe und Kugel herangezogen werden. Eine Projektion welche linientreu bzgl. Distanzen auf der Kugel und dem Kreis ist, erlaubt es die Übergangszone schmäler zu wählen und den Sprung zu minimieren.

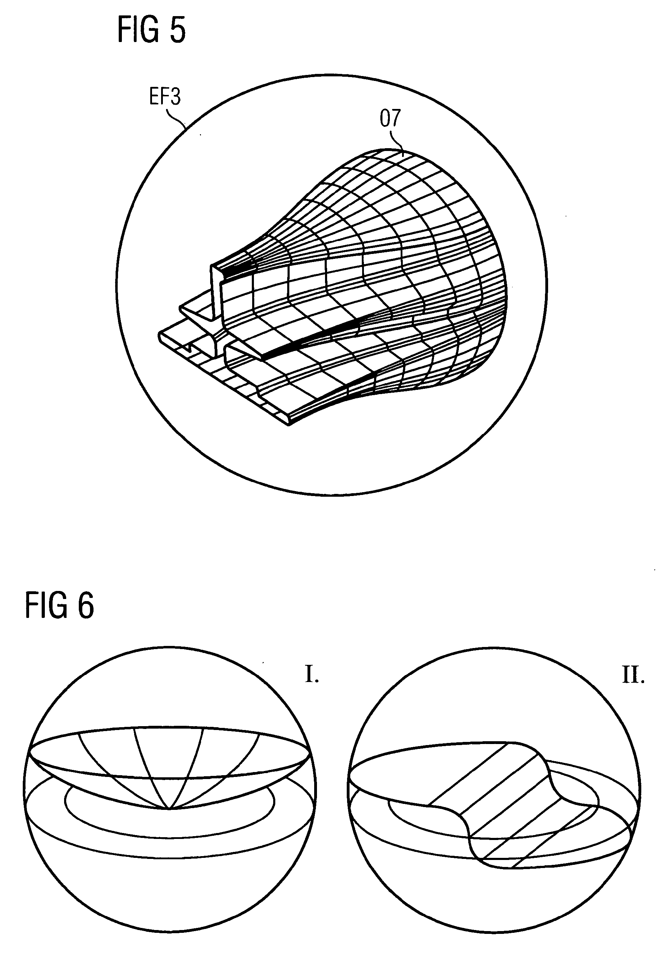

FIG 5 zeigt eine schematische Darstellung für ein Objekt O7, welches von einem Steuerkreis EF3 umgeben ist. Anstelle der Steuerung durch ein zusätzliches Kontrollelement kann das Objekt O7 selbst "maßstabsgetreu" bewegt werden; d.h. um eine komplette Kamerafahrt um das Objekt zu erzeugen, muss das Objekt einmal vollständig abgefahren werden (entspricht einer Strecke von zweimal dem Durchmesser). Die Zone für den Seitenwechsel sollte hierbei angedeutet werden, beispielsweise indem ein Kreis EF3 um das Objekt O7 herum angezeigt wird.

Kann die Kamerafahrt nur innerhalb der angedeuteten Randzone begonnen werden, so hat dies den Vorteil, dass das Objekt selbst weiterhin für andere Aktionen verfügbar bleibt, etwa die Auswahl von Bauteilen oder das Kommentieren dieser, usw.

FIG 6 zeigt beispielhafte Darstellungen für die Begrenzung der möglichen Blickwinkel innerhalb des Kreises. Prinzipiell können auch nur Kugelausschnitte angewählt werden. Dies können einfache Schnitte der Kugel mit Flächen sein wie in der linken Teilfigur I von FIG 6 dargestellt. Es sind aber auch komplexere, mathematisch berechenbare Strukturen möglich, wie in der rechten Teilfigur II von FIG 6 dargestellt. Dies erlaubt die Einschränkung der verfügbare Blickwinkel auf das Objekt, etwa nur die Vorderseite eines Objekts, oder wie in Teilfigur I nur Blick von oben mit einer gewissen Mindesthöhe.

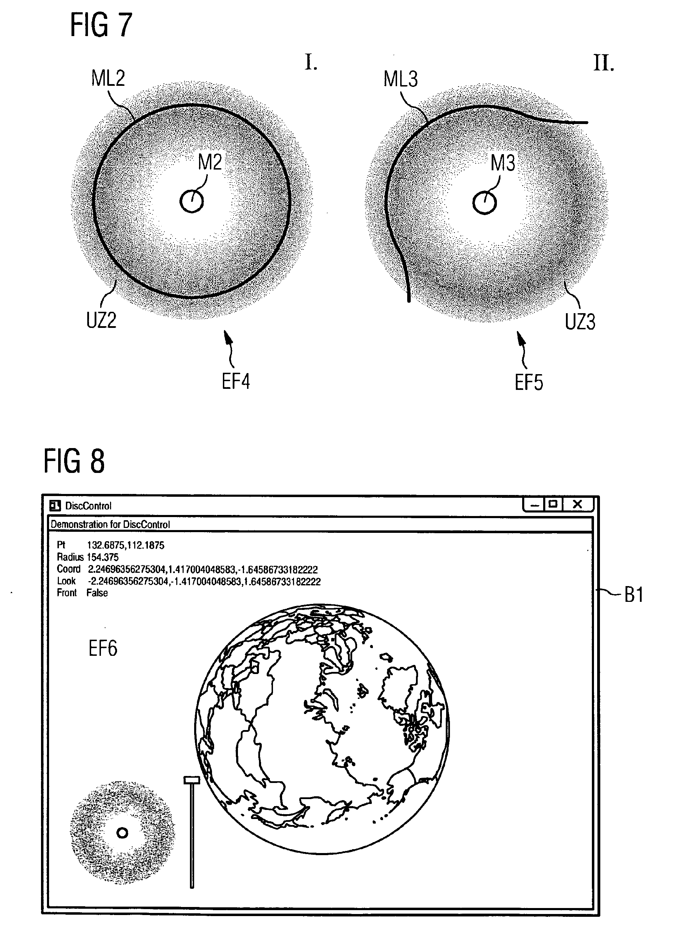

FIG 7 zeigt schematische Darstellungen für eine beispielhafte Visualisierung von Begrenzungen ML2, ML3 auf der Steuerscheibe EF4 bzw. EF5. Die Teilfiguren I und II von FIG 7 zeigen jeweils eine kreisförmige Eingabefläche EF4 und EF5 mit den dunkelgrau dargestellten Übergangszonen UZ2 bzw. UZ3 und mit den Mittelpunkten M2 bzw. M3. Weiterhin stellen die Markierungslinien ML2 und ML 3 für eine Kamerafahrt (z.B. um ein Objekt aus unterschiedlichen Blickwinkeln zu betrachten) gesetzte Grenzen dar. Eine eben ausgeführte Kamerafahrt muss hier an der letzten gültigen Position verweilen. Befindet sich die Zone UZ2, UZ3 für den Seitenwechsel im gesperrten Bereich, so erfolgt kein Seitenwechsel.

Vorteile und vorteilhafte Ausgestaltungen des vorgestellten erfindungsgemäßen Verfahrens sind insbesondere:

- Es sind flüssige, durchgängige Änderungen des Betrachtungswinkels auf ein Objekt möglich, ohne dass man etwa durch den Bildschirmrand begrenzt wird.
- Kann sowohl rein in Software gelöst werden (z.B. für Object- Viewer), als auch in Hardware. Die vorgestellte Methode kann z.B. ohne abstehende Teile in Panels neben anderen Bedienelementen integriert werden und ist daher einfach zu säubern. Dies ist eine Grundvoraussetzung für Krankenhäuser und andere sterile Umgebungen. Eine mögliche Implementierung wäre über kapazitive berührungsempfindliche Elemente denkbar.
- Da das betrachtete Objekt nicht selbst zur Steuerung der Bewegung genutzt wird, können weitere Funktionen (Markieren, Kommentieren, und beliebig andere Aktionen) auf das betrachtete Objekt angewendet werden.
- Es wird nicht die vollständige Fläche des dargestellten Objektes zur Eingabe benötigt. Bereits ein kleiner Bereich genügt zum theoretisch endlosen Variieren des Betrachtungswinkels.
- Neben der Objekt-Ansicht im 3D-Raum und dem Verschieben von Flächen ist grundsätzlich jede weitere Steuerungsmöglichkeit denkbar, die auf Bewegungen auf eine Kugel abbildbar ist. Dies könnte das Schwenken eines Gerätes/Gefährtes sein, oder auch die die Steuerung von mobilen Entitäten mit Geschwindigkeitsangabe durch Anzahl der zurückgelegten Umdrehungen.

FIG 8 zeigt eine beispielhafte Darstellung der Eingabescheibe EF6 als eigenständiges Kontrollelement auf einem Bildschirm bzw. auf einem Bildschirmfenster (window) B1.

Das Ausführungsbeispiel von FIG 8 stellt eine prototypische Implementierung der Eingabefläche EF6 dar und wurde mit der Windows Presentation Foundation (WPF™) realisiert. Mit Hilfe der Eingabefläche EF8 links unten kann die Weltkugel aus jeder beliebigen Position betrachtet werden. Der optionale Balken rechts neben der Eingabefläche EF6 dient dem Zoomen. Darüber hinaus kann die Zoomfunktionalität auf mannigfaltige Weise realisiert werden, etwa im Fall eines softwarebasierten Eingabeelementes wie in diesem Ausführungsbeispiel nach FIG 8 durch ein Mausrad an einem zeigergebenden Eingabegerät eines Computers.

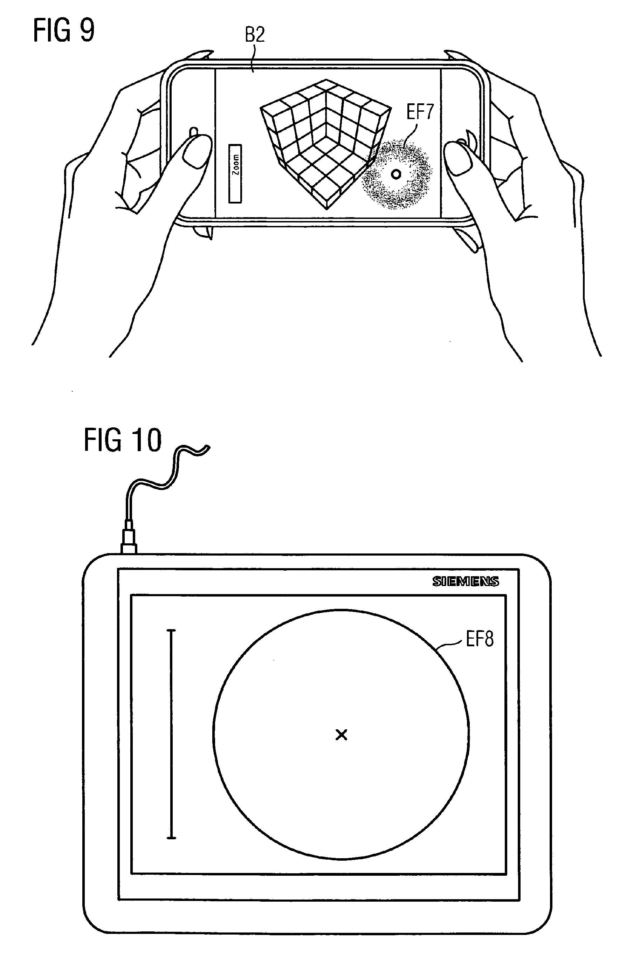

FIG 9 zeigt eine beispielhafte Darstellung der Eingabefläche EF7 als eigenständiges Kontrollelement auf einem Display (Monitor) B2 eines Handheld-Gerätes (z.B. Palmtop-Gerät, PDA oder Smart Phone). Vorteilhafterweise kann das Handheld-Gerät berührungsempfindlich sein. Zentral in FIG 9 ist das betrachtete Objekt zu sehen, hier eine Struktur, zusammengesetzt aus Würfeln. Rechts unten befindet sich die Eingabefläche EF7 zur Auswahl und Variation des Betrachtungswinkels. Optional ist ein Eingabeelement für das Zoomen des Objektes möglich.

Sofern das Eingabegerät mehrere Berührungspunkte zur gleichen Zeit verarbeiten kann (Multi- Touch- Fähigkeit), kann zeitgleich gezoomt als auch der Blickwinkel variiert werden. Bei Geräten mit Multi- Touch- Fähigkeit sind vorteilhafterweise das Eingabeelement für das Zoomen und die Eingabefläche EF7 zum Variieren des Blickwinkels gleichzeitig durch jeweils eine Hand bedienbar.

FIG 10 zeigt eine beispielhafte Darstellung der Eingabescheibe EF8 als externes Bediengerät bzw. integriert in einem externen Bediengerät, welches an einem Computer bzw. Ausgabegerät (z.B. Monitor) anschließbar ist. Das in FIG 10 angegebene Eingabegerät zur Bedienung per Stift und/oder Finger könnte sowohl eine klassische Touchpad-Funktionalität aufweisen, als auch im Sinne einer Erweiterung die Funktionalität zum Ändern des Blickwinkels durch die Eingabefläche EF8. Ein Wechsel zwischen der klassischen Zeigergebung (Cursor) und dem Steuern eines Betrachtungswinkels könnte sowohl software-seitig ermöglicht werden, als auch durch einen Knopf/Schalter am Eingabegerät selbst oder an einem zugehörigen Eingabestift.

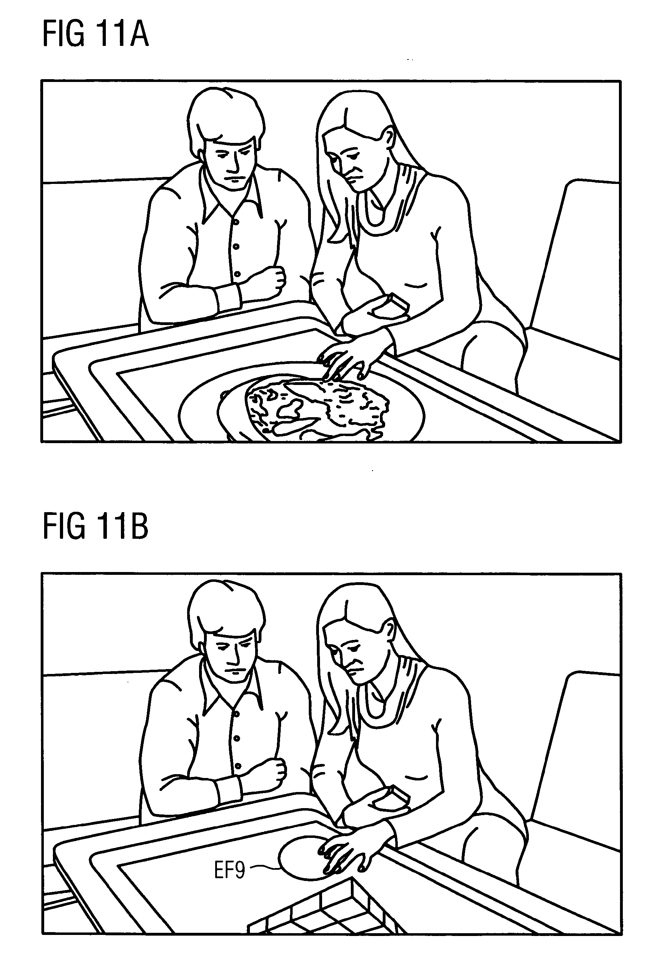

FIG 11a zeigt eine erste beispielhafte Darstellung der Eingabefläche auf einem Surface™-Tisch (berührungsempfindlicher Oberflächentisch). In FIG 11a ist die Eingabefläche als Steuerkreis über dem Objekt angeordnet.

FIG 11b zeigt eine zweite beispielhafte Darstellung der Eingabefläche EF9 auf einem Surface™-Tisch (berührungsempfindlicher Oberflächentisch). In FIG 11b ist die Eingabefläche EF9 als Eingabescheibe (zusätzliches Steuerelement) auf dem Oberflächentisch angeordnet.

In den dargestellten Beispielen wird der Ausgangspunkt auf der kreisförmigen Eingabefläche zur Umrechnung auf einen Betrachtungswinkel jeweils durch einen Mauszeiger, Finger oder ein beliebiges anderes Bedienelement (Stift, usw.) vorgegeben.

Die Eingabefläche selbst kann hierbei sowohl rein durch Software für existierende Systeme realisiert werden, aber auch separat in Form von Hardware.

Verfahren und Bedienelement zum Festlegen eines Blickwinkels für einen Beobachter auf ein zwei- oder dreidimensionales Objekt, dargestellt auf einem Ausgabegerät, wobei die Festlegung des Blickwinkels durch Steuerung auf einer einfachen Kreisscheibe erfolgt. Ein Punkt auf dieser Scheibe wird dabei auf eine Position auf einer virtuellen Kugel umgerechnet. Durch die Achse, bestimmt durch die berechnete Position auf der virtuellen Kugel und dem Kugelmittelpunkt, wird der jeweilige Blickwinkel auf das Objekt festgelegt.

Bezugszeichen

| | |
|---|---|
| 01 - 07 | Objekt |
| BW1, BW2 | Blickwinkel |
| W1, W2 | Würfel |
| NE1 - NE3 | Navigationselement |
| EF1 - EF9 | Eingabefläche |
| VK | Virtuelle Kugel |
| UZ1 - UZ3 | Übergangszone |
| KAL | Kreisaußenlinie |
| ML1 - ML3 | Markierungslinie |
| M1 - M3 | Mittelpunkt |
| B1 - B2 | Bildschirm |

**Patentansprüche**

1. Verfahren zum Festlegen eines Blickwinkels (BW1,BW2) für einen Beobachter auf ein Objekt (O1 - O7) umfassend die folgenden Schritte:

   a) Festlegen eines Blickwinkels (BW1,BW2) für den Beobachter durch mechanisch-taktile oder indirekte Eingabe auf einer kreisförmigen, im Wesentlichen ebenen, Eingabefläche (EF1 - EF9),
   wobei ein, durch die Eingabe festgelegter, Punkt der kreisförmigen Eingabefläche (EF1 - EF9) in einen Positionspunkt auf einer virtuellen Kugel (VK) umgerechnet wird,
   wobei die Mittelpunkte der virtuellen Kugel (VK) und des Objektes (O1 - O7) im Wesentlichen übereinstimmen, und
   wobei durch die Verbindungslinie vom Mittelpunkt der virtuellen Kugel (VK) zum Positionspunkt auf der Kugel (VK) der Blickwinkel (BW1,BW2) für den Beobachter festgelegt wird,
   wobei die mechanisch-taktile oder indirekte Eingabe von der Eingabefläche (EF1 - EF9) kontinuierlich erfasst wird und bei Eintritt in eine um den Kreisrand befindliche Übergangszone (UZ1 - UZ3) der Eingabefläche (EF1 - EF9) automatisch der Positionspunkt auf den hinteren Teil der virtuellen Kugel (VK) wandert; und
   b) Darstellen des Objektes (O1 - O7) bezüglich des festgelegten Blickwinkels (BW1,BW2) auf einer Ausgabeeinrichtung (B1,B2).

2. Verfahren nach Anspruch 1, wobei eine Kreisaußenlinie (KAL) auf der Eingabefläche (EF1 - EF9) angebracht ist.

3. Verfahren nach einem der vorstehenden Ansprüche, wobei ein Kreismittelpunkt (M1 - M3) auf der Eingabefläche (EF1 - EF9) angebracht ist.

4. Verfahren nach einem der vorstehenden Ansprüche, wobei die Übergangszone (UZ1 - UZ3) farblich oder taktil auf der Eingabefläche (EF1 - EF9) angebracht ist.

5. Verfahren nach einem der vorstehenden Ansprüche, wobei die Umrechnung einer Position auf der Eingabefläche (EF1 - EF9) auf den Positionspunkt der virtuellen Kugel (VK) durch eine Kegelmantel-Projektion oder Azimutal-Projektion erfolgt.

6. Verfahren nach einem der vorstehenden Ansprüche, wobei die kreisförmige Eingabefläche (EF1 - EF9) das Objekt (O1 - O7) selbst umgibt oder zwischen Beobachter und Objekt (O1 - O7) ist.

7. Verfahren nach einem der vorstehenden Ansprüche, wobei der Blickwinkel (BW1,BW2) auf Ausschnitte des Objekts (O1 - O7) beschränkt ist.

8. Verfahren nach einem der vorstehenden Ansprüche, wobei die Eingabefläche (EF1 - EF9) konvex oder konkav ist.

9. Verfahren nach einem der vorstehenden Ansprüche, wobei die Blickrichtung (BW1,BW2) und/oder Ausgangspunkt des Beobachters um einen festen relativen Wert verschiebbar sind.

10. Bedienelement (NE1- NE3, W1, W2), zur Ausführung eines Verfahrens nach einem der Ansprüche 1 bis 9.

11. Bedienelement (NE1 - NE3,W1,W2) nach Anspruch 10, wobei das Objekt (O1 - O7) bezüglich des festgelegten Blickwinkels (BW1,BW2) auf einer Ausgabeeinrichtung (B1,B2) darstellbar ist.

12. Bedienelement (NE1 - NE3,W1,W2) nach Anspruch 10 oder 11, wobei das Bedienelement auf der Ausgabeeinrichtung (B1,B2) darstellbar ist.

13. Bedienelement (NE1 - NE3,W1,W2) nach Anspruch 10, 11 oder 12, wobei das Bedienelement als separates Eingabeelement ausgestaltet ist.

14. Verfahren zum Ausrichten eines Objektes (O1 - O7) durch Festlegen seiner Lage im dreidimensionalen Raum, umfassend die folgenden Schritte:

    a) Festlegen einer Achse des Objektes (O1 - O7);
    b) Festlegen der Lage durch mechanisch-taktile oder indirekte Eingabe auf einer kreisförmigen, im Wesentlichen ebenen, Eingabefläche (EF1 - EF9),
    wobei ein, durch die Eingabe festgelegter, Punkt der kreisförmigen Eingabefläche in einen Positionspunkt auf einer virtuellen Kugel (VK) umgerechnet wird,
    wobei die Mittelpunkte der virtuellen Kugel (VK) und des Objektes (O1 - O7) im Wesentlichen übereinstimmen, und
    wobei das Objekt (O1 - O7) gemäß der festgelegten Achse gedreht wird, so dass die Verbindungslinie vom Mittelpunkt der virtuellen Kugel (VK) zum Positionspunkt auf der Kugel (VK) und die festgelegte Achse übereinstimmen,
    wobei die mechanisch-taktile oder indirekte Eingabe von der Eingabefläche (EF1 - EF9) kontinuierlich erfasst wird und bei Eintritt in eine um den Kreisrand befindliche Übergangszone (UZ1 - UZ3) der Eingabefläche (EF1 - EF9) automatisch der Positionspunkt auf den hinteren Teil der virtuellen Kugel (VK) wandert.

15. Verfahren nach Anspruch 14, zusätzlich enthaltend folgenden Schritt:

    c) Darstellen des Objektes (O1 - O7) bezüglich der durch die Lageveränderung sich ergebenden Ansicht.

16. Verfahren nach Anspruch 14, wobei das Objekt (O1 - O7) ein physikalisches Objekt (O1 - O7) ist, zusätzlich enthaltend folgenden Schritt:

    d) Drehen des Objektes (O1 - O7) bezüglich der errechneten Lageveränderung.

17. Verfahren zum Verschieben einer Ansicht (BW1,BW2), umfassend die folgenden Schritte:

    a) Festlegen der Lage durch mechanisch-taktile oder indirekte Eingabe auf einer kreisförmigen, im Wesentlichen ebenen, Eingabefläche (EF1 - EF9),
    wobei ein, durch die Eingabe festgelegter, Punkt der kreisförmigen Eingabefläche (EF1 - EF9) in einen Positionspunkt auf einer virtuellen Kugel (VK) umgerechnet wird,
    wobei die Ansicht (BW1,BW2) in Richtung und Entfernung des berechneten Positionsänderung des Punktes auf der Oberfläche der virtuellen Kugel (VK) verschoben wird,
    wobei die mechanisch-taktile oder indirekte Eingabe von der Eingabefläche (EF1 - EF9) kontinuierlich erfasst wird und bei Eintritt in eine um den Kreisrand befindliche Übergangszone (UZ1 - UZ3) der Eingabefläche (EF1 - EF9) automatisch der Positionspunkt auf den hinteren Teil der virtuellen Kugel (VK) wandert.

18. Verfahren nach Anspruch 17, wobei die Ansicht einer Karte oder anderen zweidimensionalen Fläche entspricht.

19. Verfahren nach Anspruch 17, wobei die Ansicht (BW1,BW2) der Position einer Kamera in einer Ebene entspricht.

20. Verfahren nach einem der Ansprüche 14 bis 19, wobei eine Kreisaußenlinie (KAL) auf der Eingabefläche (EF1 - EF9) angebracht ist.

21. Verfahren nach einem der Ansprüche 14 bis 20, wobei ein Kreismittelpunkt (M1 - M3) auf der Eingabefläche (EF1 - EF9) angebracht ist.

22. Verfahren nach einem der Ansprüche 14 bis 21, wobei die Übergangszone (UZ1 - UZ3) farblich oder taktil auf der Eingabefläche (EF1 - EF9) angebracht ist.

23. Verfahren nach einem der Ansprüche 14 bis 22, wobei die Eingabefläche (EF1 - EF9) konvex oder konkav ist.

24. Bedienelement (NE1 - NE3,W1,W2) zur Ausführung eines Verfahrens nach einem der Ansprüche 14 bis 23.

**Claims**

1. Method for establishing an angle of view (BW1, BW2) for an observer with respect to an object (O1- O7), comprising the following steps:

   a) establishing an angle of view (BW1, BW2) for the observer by mechanical- tactile or indirect input on a circular, substantially flat, input field (EF1- EF9),
   wherein a point of the circular input field (EF1- EF9), defined by the input, is converted to a position point on a virtual sphere (VK),
   wherein the centre points of the virtual sphere (VK) and of the object (O1- O7) substantially coincide, and
   wherein the angle of view (BW1, BW2) for the observer is established by the connecting line from the centre point of the virtual sphere (VK) to the position point on the sphere (VK),
   wherein the mechanical- tactile or indirect input is determined continuously by the input field (EF1- EF9) and, when a transition zone (UZ1- UZ3) of the input field (EF1- EF9) located around the edge of the circle is entered, the position point automatically migrates to the rear part of the virtual sphere (VK) ; and
   b) displaying the object (O1 - O7) with respect to the established angle of view (BW1,BW2) on an output device (B1,B2).

2. Method according to claim 1, wherein a circle outline (KAL) is applied to the input field (EF1 - EF9).

3. Method according to one of the preceding claims, wherein a circle centre point (M1 - M3) is applied to the input field (EF1 - EF9).

4. Method according to one of the preceding claims, wherein the transition zone (UZ1 - UZ3) is applied in colour or in tactile form to the input field (EF1 - EF9).

5. Method according to one of the preceding claims, wherein a position on the input field (EF1 - EF9) is converted to the position point of the virtual sphere (VK) by conical or azimuthal projection.

6. Method according to one of the preceding claims, wherein the circular input field (EF1 - EF9) surrounds the actual object (O1 - 07) or lies between observer and object (O1 - O7).

7. Method according to one of the preceding claims, wherein the angle of view (BW1,BW2) is restricted to sections of the object (O1 - O7).

8. Method according to one of the preceding claims, wherein the input field (EF1 - EF9) is convex or concave.

9. Method according to one of the preceding claims, wherein the viewing direction (BW1,BW2) and/or starting point of the observer is movable by a fixed relative value.

10. Operating element (NE1 - NE3,W1,W2) for carrying out a method according to one of claims 1 to 9.

11. Operating element (NE1 - NE3,W1,W2) according to claim 10, wherein the object (O1 - O7) can be displayed relative to the established angle of view (BW1,BW2) on an output device (B1,B2).

12. Operating element (NE1 - NE3,W1,W2) according to claim 10 or 11, wherein the operating element can be displayed on the output device (B1,B2).

13. Operating element (NE1 - NE3,W1,W2) according to claim 10, 11 or 12, wherein the operating element is embodied as a separate input element.

**14.** Method for aligning an object (O1 - O7) by establishing its location in three-dimensional space, comprising the following steps:

a) establishing an axis of the object (O1 - O7);
b) establishing the location by mechanical- tactile or indirect input on a circular, substantially flat, input field (EF1- EF9),
wherein a point of the circular input field, defined by the input, is converted into a position point on a virtual sphere (VK),
wherein the centre points of the virtual sphere (VK) and of the object (O1- O7) substantially coincide, and
wherein the object (O1- O7) is rotated according to the established axis so that the connecting line from the centre point of the virtual sphere (VK) to the position point on the sphere (VK) and the established axis coincide, wherein the mechanical- tactile or indirect input is determined continuously by the input field (EF1- EF9) and, when a transition zone (UZ1- UZ3) of the input field (EF1- EF9) located around the edge of the circle is entered, the position point automatically migrates to the rear part of the virtual sphere (VK) .

**15.** Method according to claim 14, additionally including the following step:

c) displaying the object (O1 - O7) relative to the view resulting from the change of location.

**16.** Method according to claim 14, wherein the object (O1 - O7) is a physical object (O1 - O7), additionally including the following step:

d) rotating the object (O1 - O7) relative to the calculated change of location.

**17.** Method for moving a view (BW1, BW2), comprising the following steps:

a) establishing the location by mechanical- tactile or indirect input on a circular, substantially flat, input field (EF1- EF9),
wherein a point of the circular input field (EF1- EF9) defined by the input is converted into a position point on a virtual sphere (VK),
wherein the view (BW1, BW2) is moved in the direction and distance of the calculated change of position of the point on the surface of the virtual sphere (VK),
wherein the mechanical- tactile or indirect input is determined continuously by the input field (EF1- EF9) and, when a transition zone (UZ1- UZ3) of the input field (EF1- EF9) located around the edge of the circle is entered, the position point automatically migrates to the rear part the virtual sphere (VK) .

**18.** Method according to claim 17, wherein the view corresponds to a map or another two-dimensional surface.

**19.** Method according to claim 17, wherein the view (BW1,BW2) corresponds to the position of a camera in a plane.

**20.** Method according to one of claims 14 to 19, wherein a circle outline (KAL) is applied to the input field (EF1 - EF9).

**21.** Method according to one of claims 14 to 20, wherein a circle centre point (M1 - M3) is applied to the input field (EF1 - EF9).

**22.** Method according to one of claims 14 to 21, wherein the transition zone (UZ1 - UZ3) is applied in colour or in tactile form on the input field (EF1 - EF9).

**23.** Method according to one of claims 14 to 22, wherein the input field (EF1 - EF9) is convex or concave.

**24.** Operating element (NE1 - NE3,W1,W2) for carrying out a method according to one of claims 14 to 23.


**Revendications**

**1.** Procédé de définition d'un angle de vue (BW1, BW2) pour un observateur regardant un objet (O1- O7), comprenant les étapes suivantes :

a) définition d'un angle de vue (BW1, BW2) pour l'observateur par entrée mécano- tactile ou indirecte sur une surface d'entrée (EF1- EF9) circulaire, essentiellement plane,
un point de la surface d'entrée circulaire (EF1- EF9) défini par l'entrée étant converti en un point de position sur une sphère virtuelle (VK),
les centres de la sphère virtuelle (VK) et de l'objet (O1- O7) coïncidant essentiellement et
l'angle de vue (BW1, BW2) pour l'observateur étant défini par la ligne de jonction du centre de la sphère virtuelle (VK) au point de position sur la sphère (VK),
l'entrée mécano- tactile ou indirecte étant saisie de manière continue par la surface d'entrée (EF1- EF9) et le point de position passant automatiquement sur la partie postérieure de la sphère virtuelle (VK) lors de l'entrée dans une zone de transition (UZ1- UZ2) de la surface d'entrée (EF1- EF9) se trouvant sur le tour du bord du cercle ; et
b) représentation de l'objet (O1 - O7) par rapport à l'angle de vue défini (BW1, BW2) sur un dispositif de sortie (B1, B2).

2. Procédé selon la revendication 1, une ligne extérieure circulaire (KAL) étant ajoutée sur la surface d'entrée (EF1 - EF9).

3. Procédé selon l'une des revendications précédentes, un centre de cercle (M1 - M3) étant ajouté sur la surface d'entrée (EF1 - EF9).

4. Procédé selon l'une des revendications précédentes, la zone de transition (UZ1 - UZ3) étant ajoutée sur la surface d'entrée (EF1 - EF9) au moyen d'une couleur ou par un moyen tactile.

5. Procédé selon l'une des revendications précédentes, la conversion d'une position sur la surface d'entrée (EF1 - EF9) en le point de position de la sphère virtuelle (VK) s'effectuant au moyen d'une projection conique ou d'une projection azimutale.

6. Procédé selon l'une des revendications précédentes, la surface d'entrée circulaire (EF1 - EF9) entourant l'objet (O1 - O7) lui-même ou étant située entre l'observateur et l'objet (O1 - O7).

7. Procédé selon l'une des revendications précédentes, l'angle de vue (BW1, BW2) étant limité à des extraits de l'objet (O1 - O7).

8. Procédé selon l'une des revendications précédentes, la surface d'entrée (EF1 - EF9) étant convexe ou concave.

9. Procédé selon l'une des revendications précédentes, la direction du regard (BW1, BW2) et/ou le point de départ de l'observateur pouvant être déplacé(e)/s d'une valeur relative fixe.

10. Élément de commande (NE1- NE3, W1, W2), pour l'exécution d'un procédé selon l'une des revendications 1 à 9.

11. Élément de commande (NE1 - NE3,W1,W2) selon la revendication 10, l'objet (O1 - O7) pouvant être représenté sur un dispositif de sortie (B1, B2) par rapport à l'angle de vue défini (BW1, BW2).

12. Élément de commande (NE1 - NE3,W1,W2) selon la revendication 10 ou 11, l'élément de commande pouvant être représenté sur le dispositif de sortie (B1, B2).

13. Élément de commande (NE1 - NE3,W1,W2) selon la revendication 10, 11 ou 12, l'élément de commande étant exécuté en tant qu'élément d'entrée séparé.

14. Procédé pour orienter un objet (O1 - O7) en définissant sa position dans l'espace tridimensionnel, comprenant les étapes suivantes :

a) définition d'un axe de l'objet (O1 - O7);
b) définition de la position par entrée mécano-tactile ou indirecte sur une surface d'entrée (EF1 - EF9) circulaire, essentiellement plane,
un point de la surface d'entrée circulaire défini par l'entrée étant converti en un point de position sur une sphère virtuelle (VK),
les centres de la sphère virtuelle (VK) et de l'objet (O1 - 07) coïncidant essentiellement et

l'objet (O1 - O7) étant tourné selon l'axe défini de manière à ce que la ligne de jonction du centre de la sphère virtuelle (VK) au point de position sur la sphère (VK) et l'axe défini coïncident,
l'entrée mécano-tactile ou indirecte étant saisie de manière continue par la surface d'entrée (EF1 - EF9) et le point de position passant automatiquement sur la partie postérieure de la sphère virtuelle (VK) lors de l'entrée dans une zone de transition (UZ1 - UZ3) de la surface d'entrée (EF1 - EF9) se trouvant sur le tour du bord du cercle.

15. Procédé selon la revendication 14, comprenant, en plus, l'étape suivante :

c) représentation de l'objet (O1 - O7) par rapport à la vue résultant du changement de position.

16. Procédé selon la revendication 14, l'objet (O1 - O7) étant un objet physique (O1 - O7), comprenant, en plus, l'étape suivante :

d) rotation de l'objet (O1 - O7) en rapport avec le changement de position calculé.

17. Procédé pour déplacer une vue (BW1, BW2), comprenant les étapes suivantes :

a) définition de la position par entrée mécano- tactile ou indirecte sur une surface d'entrée (EF1- EF9) circulaire, essentiellement plane,
un point de la surface d'entrée circulaire (EF1- EF9) défini par l'entrée étant converti en un point de position sur une sphère virtuelle (VK),
la vue (BW1, BW2) étant déplacée en s'approchant et en s'éloignant du changement de position calculé du point sur la surface de la sphère virtuelle (VK),
l'entrée mécano- tactile ou indirecte étant saisie de manière continue par la surface d'entrée (EF1- EF9) et le point de position passant automatiquement sur la partie postérieure de la sphère virtuelle (VK) lors de l'entrée dans une zone de transition (UZ1- UZ3) de la surface d'entrée (EF1- EF9) se trouvant sur le tour du bord du cercle.

18. Procédé selon la revendication 17, la vue correspondant à une carte ou une autre surface bidimensionnelle.

19. Procédé selon la revendication 17, la vue (BW1, BW2) correspondant à la position d'une caméra dans un plan.

20. Procédé selon l'une des revendications 14 à 19, une ligne extérieure circulaire (KAL) étant ajoutée sur la surface d'entrée (EF1 - EF9)

21. Procédé selon l'une des revendications 14 à 20, un centre de cercle (M1 - M3) étant ajouté sur la surface d'entrée (EF1 - EF9).

22. Procédé selon l'une des revendications 14 à 21, la zone de transition (UZ1 - UZ3) étant ajoutée sur la surface d'entrée (EF1 - EF9) au moyen d'une couleur ou par un moyen tactile.

23. Procédé selon l'une des revendications 14 à 22, la surface d'entrée (EF1 - EF9) étant convexe ou concave.

24. Élément de commande (NE1 - NE3,W1,W2) pour l'exécution d'un procédé selon l'une des revendications 14 à 23.

# FIG 1

# FIG 2A

## FIG 2B

## FIG 2C

## FIG 2D

NE2

## FIG 2E

NE3

FIG 2F

FIG 2G

## FIG 3

## FIG 4

## FIG 5

## FIG 6

FIG 7

I.                                                    II.

ML2                                              ML3

M2                                                M3

UZ2                                              UZ3

EF4                                              EF5

FIG 8

DiscControl

Demonstration for DiscControl

Pt        132.6875,112.1875
Radius 154.375
Coord  2.24696356275304,1.417004048583,-1.64586733182222
Look   -2.24696356275304,-1.417004048583,1.64586733182222
Front   False

EF6

B1

FIG 9

B2

EF7

Zoom

FIG 10

SIEMENS

EF8

×

## FIG 11A

## FIG 11B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070282792 A1
- EP 1363246 A1